# EUROPEAN PATENT SPECIFICATION

(11) **EP 1 375 428 B1**
(45) Date of publication and mention of the grant of the patent: **12.11.2008**
(21) Application number: 03013641.0
(22) Date of filing: 16.06.2003
(51) Int. Cl.: C01G 23/053, H01G 9/20

(54) **Methods for producing titanium oxide sol and fine titanium oxide particles for use in photoelectric conversion devices**
Verfahren zur Herstellung von titandioxidsolen und feine titandioxid-Partikel, sowie Verwendung in photoelektrischen Halbleiter-Umwandlungsvorrichtungen
procédé de préparation de sole d'oxyde de titane et particules fine d'oxyde de titane et utilisation dans un dispositif de conversion photoélectrique

(30) Priority: 17.06.2002 JP 2002175455; 24.09.2002 JP 2002276932; 06.12.2002 JP 2002355568
(43) Date of publication of application: 02.01.2004
(73) Proprietor: FUJIFILM Corporation, Minato-ku Tokyo (JP)
(72) Inventor: Tsukahara, Jiro, c/o Fuji Photo Film Co., Ltd., Minami-Ashigara-shi, Kanagawa-ken (JP)
(74) Representative: Solf, Alexander

(56) References cited:
- WO-A-03/068682
- A. ZABAN, S.T. ARUNA, S. TIROSCH, B.A. GREGG, Y. MASTAI: "THE EFFECT OF THE PREPARATION CONDITION OF TIO2 COLLOIDS ON THEIR SURFACE STRUCTURES" J. PHYS. CHEM. B, vol. 104, 2000, pages 4130-4133, XP002257421
- C.J.BARB¹, F. ARENDSE, P. COMTE, M. JIROUSEK, F. LENZMANN, V. SHKLOVER, M. GRÄTZEL: "NANOCRYSTALLINE TITANIUM OXIDE ELECTRODES FOR PHOTOVOLTAIC APPLICATIONS" J. AM. CERAM. SOC, vol. 80, no. 12, 1997, pages 3157-3171, XP002257422
- D. VORKAPIC, T. MATSOUKAS: "EFFECT OF TEMPERATURE AND ALCOHOLS IN THE PREPARATION OF TITANIA NANOPARTICLES FROM ALKOXIDES" J. AM. CERAM. SOC., vol. 81, no. 11, 1998, pages 2815-2820, XP002257423

## Description

### FIELD OF THE INVENTION

The present invention relates to a method for producing a titanium oxide sol, a method for producing fine titanium oxide particles, and a photoelectric conversion device, and particularly to a method for producing a titanium oxide sol, a method for producing fine titanium oxide particles suitable for a photoelectric conversion device using dye-sensitized titanium oxide particles, and a photoelectric conversion device comprising the fine titanium oxide particles produced by such a method.

### BACKGROUND OF THE INVENTION

Photoelectric conversion devices have been used for various kinds of optical sensors, copiers, photoelectric generators, etc. Put into practical use are various types of photoelectric conversion devices, such as those using metals, those using semiconductors, those using organic pigments or dyes, combinations thereof.

For example, photoelectric conversion devices using fine semiconductor particles sensitized by dyes (hereinafter referred to as "dye-sensitized photoelectric conversion devices"), and materials and methods for producing them have been disclosed in U.S. Patents 4,927,721, 4,684,537, 5,084,365, 5,350,644, 5,463,057 and 5,525,440, WO 98/50393, JP 7-249790 A, JP 10-504521 A, Journal of the American Ceramic Society, 1997, Vol. 80, pages 3157 to 3171, Accounts of Chemical Research, 2000, Vol. 33, pages 269 to 277, Journal of the American Chemical Society, 1993, Vol. 115, page 6832, etc. The dye-sensitized photoelectric conversion devices are advantageous in that they can be produced at a reduced cost by using fine titanium oxide particles.

The fine titanium oxide particles are generally produced by a sol-gel method widely known as a fine particle-producing method in the field. The sol-gel method comprises the steps of hydrolyzing a titanium oxide precursor; producing a titanium oxide sol by dehyration; particle growth; and an after-treatment (see S.D. Burnside, et al., Chemistry of Materials, 1998, Vol. 10, No. 9, pages 2419 to 2425, etc.) Further, examples of using the fine titanium oxide particles produced by the sol-gel method for the dye-sensitized photoelectric conversion devices have been reported in Journal of the American Ceramic Society, 1997, Vol. 80, pages 3157 to 3171, etc.

In addition, a process for preparing TiO₂ colloids, where titanium (IV) isopropoxide into acid followed by aging, evaporating the 2-propanpol, and hydrothermal processing is disclosed in J. Phys. Chem. B 2000, 104, 4130-4133. In the process of evaporation, the resulting solutions were heated at 82°C for 2 h to evaporate the 2-propanol.

Further, the International Patent Application WO 03/068682 A1, which was published after the filing date of the present Patent Application relates to nanoscale rutile or oxide powder that is obtained by producing amorphous TiO₂ by mixing an alcoholic solution with a titanium alcoholate and with an aluminum alcoholate and adding water and acid. The amorphous, aluminum-containing TiO₂ is isolated by removing the solvent, and is redispersed in water in the presence of a tin salt. A thermal or hydrothermal aftertreatment yields rutile or oxide that can be redispersed to primary particle size.

Titanium oxide may have a crystal form of anatase, rutile, etc., and it is known that the anatase is preferred for the dye-sensitized photoelectric conversion devices. However, when high concentration of an acid is used in the titanium oxide sol-producing step (peptization step) as a dehydration catalyst, the rutile is often produced in the particle-growing step. On the other hand, when the concentration of an acid is low, the dehydration requires heating for a long period of time, resulting in difficulty to obtain a titanium oxide sol with excellent dispersion property. Thus, both of the crystal form and the productivity depend on the concentration of an acid, whereby the crystal form cannot be suitably controlled with excellent productivity. It is thus desired to solve the problem on production of the titanium oxide sol, thereby providing a photoelectric conversion device having high conversion efficiency.

A. Zaban, S.T. Aruna, S. Tirosch, B. A. Gregg, Y. Mastai, J. Phys. Chem. B., 2000, 104, 4130-4133 discloses a process for preparing TiO₂-Colloids where titanium (IV) isopropoxide is added to an acidic aqueous solution under vigorous stirring, the solutions are subjected to aging for 12 h at room temperature and after that the resulting solutions are heated to 82°C for 2 hours to evaporate the isopropanol.

### OBJECTS OF THE INVENTION

Accordingly, an object of the present invention is to provide a method for efficiently producing a titanium oxide sol having excellent dispersion stability, a method for efficiently producing fine titanium oxide particles from the titanium oxide sol.

Another object of the present invention is to provide a process for producing small titania colloidal crystallites.

### SUMMARY OF THE INVENTION

As a result of intensive research in view of the above objects, the inventor has found that a titanium oxide sol and fine titanium oxide particles having excellent dispersion stability. The present invention has been completed based on this finding.
(1) A method for producing a titanium oxide sol, comprising the steps of hydrolyzing an orthotitanate, and dehydrating the resultant hydrolyzate in the presence of an acid catalyst, end wherein an alcohol contained in the reaction liquid is removed by a decantation method before the dehydrating step, and the amount of remaining alcohol in the reaction liquid after an alcohol-removing step is 0.01 mol/L or less.
(2) The method for producing a titanium oxide sol according to (1) or (2), wherein 0.005 to 0.09 mol/L of a strong acid is used as the acid catalyst in the dehydrating step.
(3) The method for producing a titanium oxide sol according to any one of (1) to (4), wherein 0.1 to 1 mol/L of a water-soluble carboxylic acid is used an an additive in the dehydrating step.
(4) A method for producing fine titanium oxide particles, wherein the titanium oxide sol produced by the method recited in any one of (1) to (5) is heated under pressure.
(5) The method for producing fine titanium oxide particles according to (6), wherein the titanium oxide sol is heated at 180 to 280°C under pressure.

### BRIEF DESCRIPTION OF THE DRAWINGS

Fig. 1 is partial cross-sectional view showing the structure of a photoelectric conversion device;
Fig. 2 is a partial cross-section view showing the structure of a photoelectric conversion device;
Fig. 3 is a partial cross-sectional view showing the structure of a photoelectric conversion device;
Fig. 4 is a partial cross-sectional view showing the structure of a photoelectric conversion device embodiment of the present invention;
Fig. 5 is a partial cross-sectional view showing the structure of a photoelectric conversion device;
Fig. 6 is a partial cross-sectional view showing the structure of a photoelectric conversion device;
Fig. 7 is a partial cross-sectional view showing the structure of a photoelectric conversion device;
Fig. 8 is a partial cross-sectional view showing the structure of a photoelectric conversion device;
Fig. 9 is a partial cross-sectional view showing the structure of a photoelectric conversion device;
Fig. 10 is a partial cross-sectional view showing the structure of the photoelectric conversion device produced in Examples.

### DETAILED DESCRIPTION OF THE PREFERRED EMBODIMENTS

### [1] Production of titanium oxide sol and fine titanium oxide particles

The method for producing a titanium oxide sol according to the present invention comprises the steps of hydrolyzing an orthotitanate and dehydration, and the method for producing fine titanium oxide particles according to the present invention comprises the steps of particle growth and an after-treatment basically by a sol-gel method. In the present invention, the dehydrating step is carried out after removing an alcohol produced in the hydrolyzing step. Each step of the methods will be described below.

### (A) Hydrolyzing step

The orthotitanate such as methyl orthotitanate, ethyl orthotitanate, isopropyl orthotitanate and butyl orthotitanate may be hydrolyzed by adding the orthotitanate into sufficiently excess water. An acid catalyst for the dehydration may be added to the water beforehand. The orthotitanate may be added at one lot or dropwise. After its addition, the resultant reaction liquid is usually stirred at 10 to 40°C for 10 minutes to 3 hours, though the temperature is not particularly limited. Obtained in the hydrolyzing step is a suspension comprising a solid containing titanium hydroxide as a main component, water and an alcohol.

The alcohol is generated from the orthotitanate in the hydrolyzing step. For instance, methanol is produced from methyl orthotitanate, ethanol is produced from ethyl orthotitanate, and 2-propanol is produced from isopropyl orthotitanate. Further, butanol is produced from butyl orthotitanate, and in this case, the suspension may separate into two layers. The alcohol is removed from the suspension (reaction liquid) by a distillation method, a filtration method, a decantation method, etc. The simplest method among them is the decantation method. This alcohol-removing step turns the amount of alcohol remaining in the above suspension to preferably 0.01 mol/L or less, more preferably substantially zero.

An example of the decantation method is described below. The suspension provided in the hydrolyzing step is left to stand or centrifuged, and the supernatant liquid is removed by decantation. Then, water or an aqueous solution of the acid catalyst equal in mass to the removed supernatant liquid is added to the remaining precipitate, sufficiently stirred, and subjected to the next step. The operations of leaving the dispersion to stand or centrifuging it, the decantation, and the addition of water (or the aqueous solution of the acid catalyst) may be repeated before the next step. Though not particularly restrictive, the number of repeating the operations may be decided in accordance with predetermined degree of removing the alcohol.

### (B) Dehydrating step

The resulting suspension is heated in the presence of the acid catalyst to produce the titanium oxide sol. A strong acid is more preferable than a weak acid as the acid catalyst, there being no particular restrictions in the acid catalyst. In the present invention, the strong acid means an acid that exhibits a dissociation degree of 50% or more in a 0.1-mol/L aqueous solution thereof. Specific examples of such acid catalysts include hydrochloric acid, sulfuric acid, nitric acid, perchloric acid, methanesulfonic acid, etc. Among the acids, nitric acid is preferred. The acid catalyst may be added in this step or in the hydrolyzing step. The acid catalysts may be used alone or in combination, and it is preferred that at least one acid catalyst contained in the combination is a strong acid.

In the case of using the acid catalyst, the relation between the formation of rutile and the productivity of the titanium oxide sol becomes a problem as described above. The concentration of the strong acid catalyst is preferably 0.002 to 0.1 mol/L, more preferably 0.005 to 0.09 mol/L, particularly 0.01 to 0.05 mol/L. The heating temperature is generally 30 to 100°C, preferably 50 to 80°C, particularly 40 to 70°C. There are no particular restrictions in the heating time, and the suspension containing titanium hydroxide as a main component may be heated until the suspension is converted into a semitransparent sol containing titanium oxide as a main component. The heating time is typically 1 to 24 hours. In general, the heating temperature may be lower and the heating time may be shorter when a larger amount of a strong acid is used. In a case where an alcohol is removed beforehand as described above, the sol can be produced under conditions of a further lower heating temperature and a further shorter heating time. For example, when the concentration of the nitric acid catalyst is 0.09 mol/L, the suspension is heated at 70°C for 5 hours to produce the titanium oxide sol in a case where the alcohol is not removed, while the sol production is completed by heating the suspension at 70°C for 2 hours in a case where the alcohol is removed. Further, in a case where the alcohol is removed, the sol production may be achieved by heating the suspension at 70°C for 1 hour and by leaving it to stand at room temperature. The titanium oxide sol produced in this step exhibits excellent dispersion stability, and contains ultrafine particles generally having crystallite sizes measured by an X-ray diffraction method (XRD method) of 4 to 5 nm.

In the dehydrating step, an additive is preferably added to inhibit production of brookite. The additive is required to be a compound that is not decomposed at 300°C or lower, does not react with a strong acid, and does not remain in a layer of fine titanium oxide particles after burning. The additive is preferably a water-soluble carboxylic acid such as acetic acid, propionic acid, butyric acid, valeric acid and 2-methoxyacetic acid, most preferably acetic acid. The concentration of the water-soluble carboxylic acid in the reaction liquid is preferably 0.01 to 2 mol/L, more preferably 0.1 to 1 mol/L, in the dehydrating step.

### (C) Particle-growing step

The titanium oxide sol produced in the above step is placed in a pressure vessel and heated to grow the ultrafine particles until the crystallite size becomes 6 to 30 nm. Examples of the pressure vessels include stainless steel autoclaves, titanium autoclaves, stainless steel autoclaves lined with titanium or Teflon (trademark), etc. The autoclave is preferably equipped with a stirring device. The pressure inside the pressure vessel is preferably 0.2 to 20 MPa, more preferably 0.5 to 10 MPa. An impurity (dopant) to be hereinafter described may be added to the sol in this step.

In a dye-sensitized photoelectric conversion device using the fine titanium oxide particles produced by the method of the present invention, the fine titanium oxide particles are used particularly effectively as main particles for carrying a dye. In this case, the particle size (crystallite size) of the fine titanium oxide particles, which is calculated from the half bandwidth of the diffraction peak at 2θ = 25.2° (hkl = 101 ) relative to Cu-Kα radiation, is preferably 8 to 30 nm, more preferably 9 to 16 nm, most preferably 10 to 13 nm. To obtain the fine titanium oxide particles with the preferred crystallite size, the titanium oxide sol is preferably heated at 180 to 280°C for 5 to 200 hours, more preferably heated at 200 to 260°C for 5 to 50 hours, most preferably heated at 220 to 240°C for 15 to 30 hours. The crystallite size of the fine titanium oxide particles depends on the heating temperature in the particle-growing step. The higher the heating temperature, the larger the crystallite size becomes.

The method for producing fine titanium oxide particles has the following advantages.
(1) Titanium oxide sols obtained by conventional methods, in which the alcohol is not removed, produce impurities when heated at 200°C or more in the particle-growing step, because an alcohol is dehydrated or polymerized by the acid catalyst or reacts with the acid catalyst. As compared with this, such impurities are not produced in the method of the invention, in which the alcohol is removed before the dehydrating step (a first advantage).
(2) Journal of the American Ceramic Society, 1997, Vol. 80, pages 3157 to 3171 reports that rutile is produced when the particles are grown at 250°C without removing the alcohol. However, in the method of the present invention, the alcohol contained in the reaction liquid is removed before the dehydrating step, whereby rutile is not produced and pure anatase titanium oxide particles with large crystallite size are produced when the reaction liquid is heated at even 280°C as shown in Examples to be hereinafter described (a second advantage).

### (D) After-treatment step

The titanium oxide dispersion thus obtained is subjected to concentration or solvent exchange in the after-treatment step. The dispersion may be finally turned to dry powder, an aqueous dispersion liquid, an aqueous dispersion paste, an organic solvent dispersion liquid, an organic solvent dispersion paste, etc. depending on purposes. The concentration of the titanium oxide dispersion may be carried out by a method of leaving the dispersion to stand or a centrifugation method followed by decantation, or by a method of distilling off water in the dispersion under a reduced pressure, etc. The solvent exchange is generally achieved by repeating operations of centrifugation, decantation and addition of solvent. A thickening agent may be used to obtain the paste, and preferred examples of such thickening agents include polymers such as polystyrenesulfonate salts, polyacrylic acids and salts thereof, polyethylene oxides, polypropylene oxides and polyacrylamides; polysaccharides; gelatins; low molecular thickening agents such as citronellol, nerol, terpineol; etc.

The titanium oxide content in the aqueous dispersion liquid, the aqueous dispersion paste, the organic solvent dispersion liquid, the organic solvent dispersion paste, etc. is 1 to 40% by mass, preferably 10 to 30% by mass.

### (E) Addition of dopant

In the present invention, a dopant may be added in at least one step of the hydrolysis of the titanium oxide precursor, the dehydration, and the particle growth. The dopant is added to convert titanium oxide into an *n*-or *p*-type semiconductor.

Examples of dopants for converting titanium oxide into an *n*-type semiconductor include elements of Group 5 of the Periodic Table such as vanadium, niobium and tantalum; and halogen elements such as fluorine, chlorine, bromine and iodine. Examples of dopants for converting titanium oxide into a *p*-type semiconductor include elements of Group 3 of the Periodic Table such as scandium, yttrium, lanthanum and lanthanoids; and elements of Group 15 of the Periodic Table such as nitrogen, phosphorus, arsenic, antimony and bismuth.

To dope the elements, a compound containing each element may be used as a dopant source. Examples of compounds containing an element of Group 5 for use as the dopant source include halides such as fluorides, chlorides, bromides and iodides of vanadium, niobium or tantalum; alkoxides such as methoxides, ethoxides, isopropoxides and butoxides of vanadium, niobium or tantalum; etc. Examples of halogen compounds for use as the dopant source include hydrogen halides; halide salts such as ammonium halides, alkylammonium halides, pyridinium halides and halides of alkaline metals or alkaline earth metals; halogen-containing salts such as tetrafluoroborate salts and hexafluorophosphate salts; etc.

Examples of compounds containing an element of Group 3 for use as the dopant source include scandium nitrate; alkoxides such as methoxides, ethoxides, isopropoxides and butoxides of scandium, yttrium or the like. Examples of compounds containing an element of Group 15 for use as the dopant source include ammonia; ammonium salts such as ammonium nitrate, ammonium phosphate and ammonium acetate; phosphines; phosphonium salts; etc. The dopant sources may be water-soluble or water-insoluble.

The mole ratio of the dopant source to the total titanium in the reaction system is 0.01 to 100% by mol, preferably 0.1 to 20% by mol.

### [2] Photoelectric conversion device

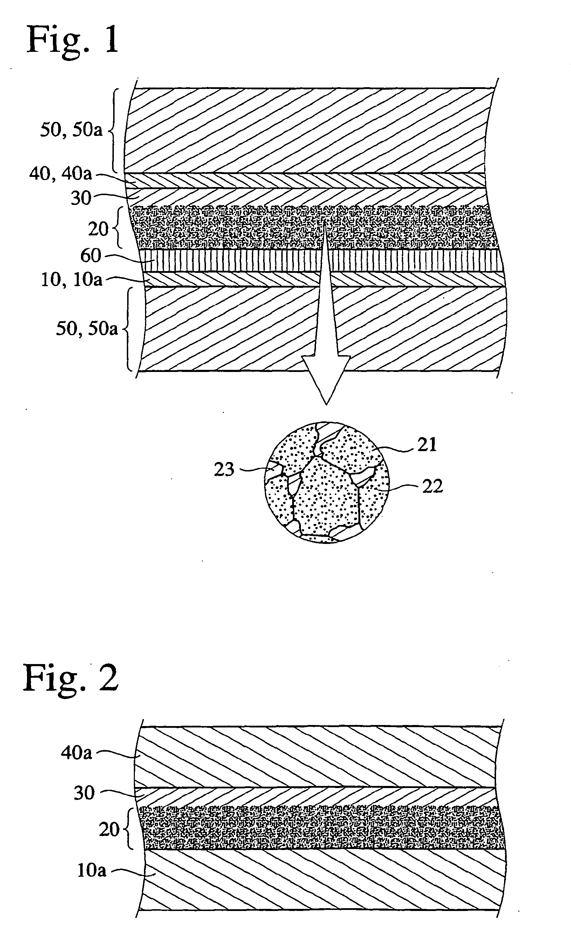

As shown in Fig. 1, the photoelectric conversion device of the present invention preferably has a laminate structure comprising an electrically conductive layer 10, a photosensitive layer 20 comprising fine semiconductor particles 21 sensitized by a dye 22 and an charge-transporting material 23 penetrating into voids among the fine semiconductor particles 21, a charge transfer layer 30, and a counter electrode layer 40 in this order. The charge-transporting material 23 in the photosensitive layer 20 may be generally the same as the charge transfer material used in the charge transfer layer 30. An undercoating layer 60 may be disposed between the electrically conductive layer 10 and the photosensitive layer 20. The electrically conductive layer 10 and/or the counter electrode layer 40 may be supported by a substrate 50 to improve the strength of the photoelectric conversion device. A layer composed of the electrically conductive layer 10 and the substrate 50 optionally used for supporting it is referred to as "conductive support," and a layer composed of the counter electrode layer 40 and the substrate 50 optionally used for supporting it is referred to as "counter electrode" hereinafter. The electrically conductive layer 10, the counter electrode layer 40 and the substrate 50 shown in Fig. 1 may be a transparent, electrically conductive layer 10a, a transparent counter electrode layer 40a and a transparent substrate 50a, respectively.

A photoelectric cell is constituted by connecting the photoelectric conversion device to an external circuit to electrically work or generate electricity in the external circuit. A photo sensor is such a photoelectric conversion device for sensing optical information. Such a photoelectric cell that uses a charge transfer material mainly composed of an ion-conductive material is referred to as a photo-electrochemical cell. A photoelectric cell intended for power generation with solar light is referred to as a solar cell.

In the photoelectric conversion device shown in Fig. 1, a light introduced into the photosensitive layer 20 containing the fine semiconductor particles 21 sensitized by the dye 22 excites the dye 22, etc., to generate excited high-energy electrons, which are transported to a conduction band of the fine semiconductor particles 21, and are diffused to reach the electrically conductive layer 10. At this time, the dye 22 is in an oxidized form. In a photoelectric cell, electrons in the electrically conductive layer 10 return to the oxidized dye through the counter electrode layer 40 and the charge transfer layer 30 while doing work in an external circuit, so that the dye 22 is regenerated. The photosensitive layer 20 acts as a negative electrode, while the counter electrode layer 40 acts as a positive electrode. In boundaries between adjacent layers, for instance, between the electrically conductive layer 10 and the photosensitive layer 20, between the photosensitive layer 20 and the charge transfer layer 30, and between the charge transfer layer 30 and the counter electrode layer 40, respectively, components of each layer may be diffused and mixed. Each of the layers and the structure of the photoelectric conversion device will be explained in detail below.

### (A) Conductive support

The conductive support is: (1) a single layer of the electrically conductive layer, or (2) two layers of the electrically conductive layer and the substrate. In the case (1), the electrically conductive layer is preferably made of a material with electrical conductivity that can provide a sufficiently sealed, electrically conductive layer with sufficient strength, for example, a metal such as platinum, gold, silver, copper, zinc, titanium, aluminum and an alloy thereof. In the case (2), the substrate having the electrically conductive layer comprising an electrically conductive material on the photosensitive layer side may be used as the conductive support. Preferable examples of the electrically conductive materials include metals such as platinum, gold, silver, copper, aluminum, rhodium and indium; carbon; electrically conductive metal oxides such as indium-tin composite oxides and tin oxides doped with fluorine; etc. The electrically conductive layer preferably has a thickness of about 0.02 to 10 µm.

The surface resistance of the conductive support is desirably as low as possible. The surface resistance of the conductive support is preferably 100 Ω/square or less, more preferably 40 Ω/square or less. The lower limit of the surface resistance is generally about 0.1 Ω/square, though it is not particularly limited.

When light is irradiated from the conductive support side, it is preferred that the conductive support is substantially transparent. The term "substantially transparent" used herein means that 10% or more of light transmittance is obtained. The light transmittance of the conductive support is preferably 50% or more, particularly 70% or more.

The transparent conductive support is preferably provided by forming the transparent, electrically conductive layer comprising an electrically conductive metal oxide on the transparent substrate of such material as a glass and a plastic by coating, vapor deposition, etc. The transparent, electrically conductive layer is preferably made of tin dioxide doped with fluorine. The transparent substrate may be made of a glass such as a low-cost soda-lime float glass excellent in strength. In addition, a transparent polymer film may be used as the transparent substrate to obtain a low-cost, flexible photoelectric conversion device. Materials usable for the transparent polymer film are tetracetyl cellulose (TAC), polyethylene terephthalate (PET), polyethylene naphthalate (PEN), syndiotactic polystyrene (SPS), polyphenylenesulfide (PPS), polycarbonate (PC), polyarylate (PAr), polysulfone (PSF), polyestersulfone (PES), polyetherimide (PEI), cyclic polyolefins, brominated phenoxy resins, etc. To secure sufficient transparency, the amount of the electrically conductive metal oxide coated is preferably 0.01 to 100 g per 1 m² of the glass or plastic substrate.

A metal lead may be used as a current collector to reduce the resistance of the transparent conductive support. The metal lead is preferably made of a metal such as platinum, gold, nickel, titanium, aluminum, copper and silver, particularly made of aluminum or silver. It is preferred that the metal lead is disposed on the transparent substrate by a vapor deposition method, a sputtering method, etc., and the transparent, electrically conductive layer comprising tin oxide doped with fluorine, ITO, etc. is formed thereon. It is also preferable that after the transparent, electrically conductive layer is formed on the transparent substrate, the metal lead is disposed on the transparent, electrically conductive layer. Decrease in the quantity of incident light by the metal lead is suppressed to preferably 10% or less, more preferably 1 to 5%.

### (B) Photosensitive layer

In the photosensitive layer, the fine semiconductor particles act as a photosensitive substance, which absorbs light and conducts charge separation to generate electrons and holes. In the dye-sensitized, fine semiconductor particles, the light absorption and the generation of electrons and holes are primarily caused by the dye, and the fine semiconductor particles receive and convey the electrons or holes. The semiconductor used is preferably an n-type semiconductor, in which conductor electrons act as a carrier under a photoexcitation condition to generate anode current.

### (1) Semiconductor

The above-mentioned, fine titanium oxide particles are used as the semiconductor in the photoelectric conversion device of the present invention.

The photoelectric conversion device preferably comprises two types of titanium oxide particles of: (i) fine titanium oxide particles intended for carrying the dye; and (ii) fine titanium oxide particles intended for scattering incident light. The fine titanium oxide particles produced by the method of the present invention is preferably used as the particles of (i). Used as the particles of (ii) may be the fine titanium oxide particles produced by the method of the present invention or other fine titanium oxide particles. The particles of (ii) may be anatase- or rutile-type. The diameter of the particles of (ii) is 50 to 800 nm, preferably 100 to 500 nm, more preferably 200 to 400 nm.

The mixing ratio (mass ratio) is such that the smaller particles of (i) are preferably 50 to 99%, more preferably 70 to 95%, and that the larger particles of (ii) are preferably 50% to 1%, more preferably 30% to 5%.

The photoelectric conversion device uses the fine titanium oxide particles produced by the above-described method of the present invention.

### (2) Layer of fine semiconductor particles

A layer of the above fine semiconductor particles is generally formed on the conductive support by applying a dispersion or a colloidal solution containing the fine semiconductor particles to the conductive support. The layer of fine semiconductor particles is relatively preferably formed by a wet-type film production method from the viewpoints of the mass production of the photoelectric conversion device, the properties of the dispersion or the colloidal solution containing fine semiconductor particles, improvement of the adaptability of the conductive support, etc. Typical examples of such wet-type film production methods include coating methods and printing methods.

The dispersion containing the fine semiconductor particles may be prepared by using the dispersion or the colloidal solution produced by the above sol-gel method, etc. without treatment; by crushing the semiconductor in a mortar; or by dispersing the semiconductor while grinding it in a mill.

A dispersion solvent for the fine semiconductor particles may be water or an organic solvent such as methanol, ethanol, isopropyl alcohol, dichloromethane, acetone, acetonitrile and ethyl acetate. Polymers such as polyethylene glycol, surfactants, acids, chelating agents, etc. may be used as dispersing agents, if necessary. Polyethylene glycol is preferably added, because the viscosity of the dispersion can be controlled and the layer of fine semiconductor particles can be formed with improved resistance to peeling by changing the molecular weight of the polyethylene glycol.

Preferable coating methods include application methods such as roller methods and dipping methods; metering methods such as air-knife methods and blade methods; methods for applying and metering in the same portion such as a wire-bar method disclosed in JP 58-4589 B, slide-hopper methods described in U.S. Patents 2,681,294, 2,761,419 and 2,761,791, extrusion methods and curtain methods; etc. In addition, spin-coating methods and spray methods are preferred as a commonly usable coating method. Preferable examples of the wet-type printing method include three major printing methods of relief printing, offset printing and gravure printing, intaglio printing methods, gum printing methods, screen printing methods, etc. A film production method may be selected from these methods depending on the viscosity of the dispersion and the desired wet thickness.

The viscosity of the dispersion containing the fine semiconductor particles materially depends on the kind or dispersion property of the fine semiconductor particles, the kind of the solvent, and an additive such as a surfactant and a binder. Preferable methods used for high-viscosity dispersions (for instance, 0.01 to 500 poise) are extrusion methods, casting methods and screen-printing methods. For low-viscosity dispersions (for instance, 0.1 poise or less), preferable methods for forming uniform films are slide-hopper methods, wire-bar methods and spin-coating methods. The extrusion methods may be used for the low-viscosity dispersion when it is coated in a relatively large amount. The film production method may be selected like this depending on the viscosity of the dispersion, the coating amount, the material of the support, the coating speed, etc.

The layer of fine semiconductor particles is not limited to a single layer. Dispersions containing the fine semiconductor particles having different particle sizes may be coated to form a multi-layer coating. Alternatively, dispersions containing different fine semiconductor particles, binders or additives may be coated to form a multi-layer coating. The multi-layer coating is effective when one coating step cannot provide a layer having a sufficient thickness. Suitable for the multi-layer coating are an extrusion method and a slide-hopper method. A plurality of layers may be coated simultaneously or successively from several times to ten-several times, to form the multi-layer coating. In the case of coating the layers successively, a screen method is also preferably used.

Generally, the thicker the layer of fine semiconductor particles (equal to the photosensitive layer in thickness), the higher the light-capturing rate, because a larger amount of the dye is incorporated therein per a unit projected area. In this case, however, there is larger loss owing to recombination of electric charges because of increased diffusion distance of the generated electrons. Thus, the preferable thickness of the layer of fine semiconductor particles is 0.1 to 100 µm. When the photoelectric conversion device of the present invention is used in a solar cell, the thickness of the layer of fine semiconductor particles is preferably 1 to 30 µm, more preferably 2 to 25 µm. The amount of the fine semiconductor particles applied to 1 m² of the conductive support is preferably 0.5 to 400 g, more preferably 5 to 100 g.

After applying the fine semiconductor particles to the conductive support, the fine semiconductor particles are preferably subjected to a heat treatment, thereby bringing them into electronic contact with each other, and thus increasing the strength of the resultant coating or the adherence to the conductive support. The heating temperature for the heat treatment is preferably 40 to 700°C, more preferably 100 to 600°C. The heating time is preferably about 10 minutes to 10 hours. In the case of using a substrate having a low melting or softening point such as a polymer film, high-temperature treatment tends to deteriorate the substrate to be not preferred. The heat treatment is preferably carried out at as low a temperature as possible from the viewpoint of cost. The heating temperature can be lowered when the heat treatment is carried out in the presence of small fine semiconductor particles having a size of 5 nm or less, a mineral acid, etc.

A pressure treatment may be carried our instead of the above heat treatment. Methods for the pressure treatment are described in detail in Lindstrom, et al, Journal of Photochemistry and Photobiology, 2001, Vol. 145, pages 107 to 112 (Elsevier). In the case of carrying out the pressure treatment, a binder such as a polymer is not used in the liquid for coating the fine semiconductor particles.

After the heat treatment or the pressure treatment, the layer of fine semiconductor particles may be subjected to a chemical metal-plating treatment using an aqueous titanium tetrachloride solution or an electrochemical metal-plating treatment using an aqueous titanium trichloride solution, as described in U.S. Patent 5,084,365.

The layer of fine semiconductor particles preferably has a large surface area such that it can adsorb a large amount of dye. The surface area of the layer of semiconductor fine particles coated on the conductive support is preferably at least 10 times, more preferably at least 100 times, as large as its projected area. Though not particularly restrictive, the upper limit of the surface area is usually about 1,000 times as large as the projected area.

### (3) Treatment

In the present invention, the fine semiconductor particles used for the photosensitive layer may be treated with a metal compound solution. Examples of the metal compounds include alkoxides, halides, etc. of metals selected from the group consisting of scandium, yttrium, lanthanoids, zirconium, hafnium, niobium, tantalum, gallium, indium, germanium and tin. The metal compound solution is usually an aqueous solution or an alcohol solution. The term "treatment" used herein means an operation of bringing the fine semiconductor particles into contact with the metal compound solution before the fine semiconductor particles adsorb the dye. After the contact, the metal compound may or may not be adsorbed onto the fine semiconductor particles. The treatment is preferably carried out after the above layer of fine semiconductor particles is formed.

The preferred treatment method may be a method in which fine semiconductor particles are immersed in the metal compound solution (immersion method). In addition, a method of spraying the metal compound solution for a predetermined time (spraying method) is also usable. The temperature of the metal compound solution in carrying out the immersion method (immersion temperature) is not particularly restrictive, and typically -10 to +70°C, preferably 0 to 40°C. The treatment time is also not particularly restrictive but may be typically 1 minute to 24 hours, preferably 30 minutes to 15 hours. After the immersion, the fine semiconductor particles may be washed with a solvent such as distilled water. Also, to strengthen the bonding of substances attached to the fine semiconductor particles by the immersion treatment, burning may be carried out. The burning conditions may be set similarly to the above-described heat treatment conditions.

### (4) Dye

Any compounds capable of absorbing a visible or near infrared ray to sensitize the semiconductor may be used as the dye for the photosensitive layer. Preferable examples of such dyes include metal complex dyes, methine dyes, porphyrin dyes and phthalocyanine dyes. Among them, the metal complex dyes are particularly preferable. Usable as the dye for the photosensitive layer are phthalocyanine, naphthalocyanine, metallophthalocyanines, metallonaphthalocyanines, porphyrins such as tetraphenylporphyrin and tetrazaporphyrin, metalloporphyrins, derivatives thereof, etc. Dyes for dye lasers are also usable in the present invention. To make the photoelectric conversion wave range as wide as possible and to increase the photoelectric conversion efficiency, two or more kinds of the dyes may preferably be combined. In the case of using two or more kinds of the dyes, the kinds and the ratio of the dyes may be selected in accordance with the wave range and the strength distribution of the light source.

The dye preferably has an appropriate interlocking group capable of being adsorbed onto the surfaces of the fine semiconductor particles. Preferable interlocking groups include acidic groups such as -COOH, -OH, - SO₂H, -P(O)(OH)₂ and -OP(O)(OH)₂, and π-conductive chelating groups such as oxime, dioxime, hydroxyquinoline, salicylate and α-ketoenolate. Particularly preferable among them are -COOH, -P(O)(OH)₂ and -OP(O)(OH)₂. The interlocking group may form a salt with an alkali metal, etc. or an intramolecular salt. If the polymethine dye has an acidic group such that its methine chain forms an squarylium or croconium ring, such an acidic group may act as the interlocking group. The preferable sensitizing dyes used for the photosensitive layer are specifically described below.

### (a) Metal complex dye

The metal complex dye used in the present invention comprises a metal atom, which is preferably ruthenium (Ru). The ruthenium complex dyes described in U.S. Patents 4,927,721, 4,684,537, 5,084,365, 5,350,644, 5,463,057 and 5,525,440, JP 7-249790 A, JP 10-504512 A and JP 2000-26487A, WO 98/50393, etc. may be used in the present invention. The specific examples of the preferred metal complex dyes are described in JP 2001-320068 A, paragraphs 0051 to 0057. The most typical examples of the metal complex dyes are represented by the following formulae D- 1 and D-2.

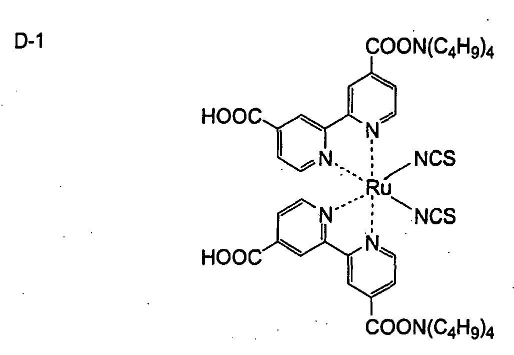

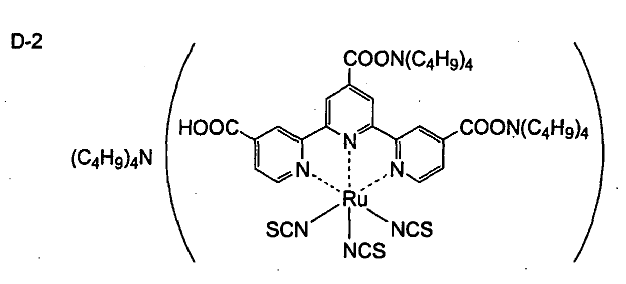

### (b) Methine dye

The methine dye used in the present invention is preferably a polymethine dye such as a cyanine dye, a merocyanine dye and an squarylium dyes. Examples of the polymethine dyes are described in JP 11-35836 A, JP 11-158395 A, JP 11-163378 A, JP 11-214730 A, JP 11-214731 A, European Patents 892411 and 911841. The method for synthesizing the polymethine dyes are described in F. M. Hamer, "Heterocyclic Compounds - Cyanine Dyes and Related Compounds" issued in 1964 by John Wiley & Sons, New York, London; D. M. Sturmer, "Heterocyclic Compounds - Special topics in Heterocyclic Chemistry," Chapter 18, Section 14, pages 82 to 515 issued in 1977 by John Wiley & Sons, New York, London; Rodd's Chemistry of Carbon Compounds, 2nd. Edition, Vol. IV, Part B, Chapter 15, pages 369 to 422 issued in 1977 by Elsevier Science Publishing Company Inc., New York; GB Patent 1,077,611; Ukrainskii Khimicheskii Zhurnal, Vol. 40, No. 3, pages 253 to 258; Dyes and Pigments, Vol. 21, pages 227 to 234; and references cited therein.

### (5) Adsorption of dye onto fine semiconductor particles

The dye may be adsorbed onto the fine semiconductor particles by soaking the conductive support having the well-dried layer of fine semiconductor particles in a dye solution, or by coating the layer of fine semiconductor particles with the dye solution. In the former case, a soaking method, a dipping method, a roller method, an air-knife method, etc. may be used. In the soaking method, the dye adsorption may be carried out at a room temperature or under reflux while heating as described in JP 7-249790 A. In the latter method, a wire-bar method, a slide-hopper method, an extrusion method, a curtain method, a spin-coating method, a spraying method, etc. may be used. Also, a dye may be applied in the form of image to the substrate by an inkjet printing method, etc., and this image per se may be used as a photoelectric conversion device.

Preferable examples of solvents for the dye solution preferably include alcohols such as methanol, ethanol, t-butanol and benzyl alcohol; nitriles such as acetonitrile, propionitrile and 3-methoxypropionitrile; nitromethane; halogenated hydrocarbons such as dichloromethane, dichloroethane, chloroform and chlorobenzene; ethers such as diethylether and tetrahydrofuran; dimethylsulfoxide; amides such as *N,N*-dimethylformamide and N,N-dimethylacetamide; N-methylpyrrolidone; 1,3-dimethylimidazolidinone; 3-methyloxazolidinone; esters such as ethyl acetate and butyl acetate; carbonates such as diethyl carbonate, ethylene carbonate and propylene carbonate; ketones such as acetone, 2-butanone and cyclohexanone; hydrocarbons such as hexane, petroleum ether, benzene and toluene; and mixtures thereof.

The amount of the dye adsorbed is preferably 0.01 to 100 mmol per a unit surface area (1 m²) of the layer of fine semiconductor particles. The amount of the dye adsorbed onto the fine semiconductor particles is preferably 0.01 to 1 mmol per 1 g of the fine semiconductor particles. With this adsorption amount of the dye, the fine semiconductor particles can be sufficiently sensitized. Too small an amount of the dye results in insufficient sensitization. On the other hand, if the amount of the dye is excessive, there is a free dye not adsorbed onto the fine semiconductor particles, thereby reducing the sensitization of the fine semiconductor particles. To increase the amount of the dye adsorbed, it is preferable that the fine semiconductor particles are subjected to a heat treatment before the dye adsorption. After the heat treatment, it is preferable that the layer of fine semiconductor particles quickly adsorbs the dye while still at 60 to 150°C without returning to room temperature, to prevent water from being adsorbed onto the fine semiconductor particles.

To weaken interaction such as association between the dyes, a colorless compound having a function of a surfactant may be added to the dye solution, so that it is adsorbed onto the fine semiconductor particles together with the dye. Examples of the colorless compounds include steroid compounds with a carboxyl group, a sulfo group, etc. such as cholic acid, deoxycholic acid, chenodeoxycholic acid and taurodeoxycholic acid; sulfonates such as the following compounds; etc.

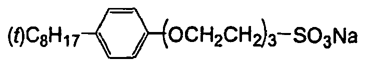

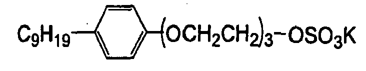

The dye not adsorbed onto the fine semiconductor particles are preferably removed by washing immediately after the dye adsorption. The washing is preferably carried out in a wet-type washing bath with an organic solvent such as acetonitrile and an alcohol solvent.

The surfaces of the fine semiconductor particles may be treated with an amine, a quaternary ammonium salt, a ureide compound comprising at least one ureide group, a silyl compound comprising at least one silyl group, an alkali metal salt, an alkaline earth metal salt, etc. after the dye adsorption. The amine is preferably pyridine, 4-t-butylpyridine, polyvinylpyridine, etc. The quaternary ammonium salt is preferably tetrabutylammonium iodide, tetrahexylammonium iodide, etc. These compounds may be used alone if they are liquid, or may be dissolved in organic solvents.

### (C) Charge transfer layer

The charge transfer layer comprises a charge transfer material having a function of supplying electrons to the oxidized dye. The charge transfer material may be (i) an ion-conductive, charge transfer material or (ii) a charge transfer material in a solid state through which carriers can be transported. Examples of the ion-conductive, charge transfer materials (i) include molten electrolytic salt compositions containing redox couples; electrolytic solutions having redox couples dissolved in solvents; so-called electrolytic gel compositions having polymer matrices impregnated with solutions containing redox couples; solid electrolytic compositions; etc. Examples of the carrier-transporting charge transfer materials (ii) include electron-transporting materials and hole-transporting materials. These charge transfer materials may be used in combination. The charge transfer layer used in the present invention is preferably composed of the molten electrolytic salt composition or the electrolytic gel composition.

### (1) Molten electrolytic salt composition

The molten electrolytic salt composition comprises a molten electrolytic salt. The molten electrolytic salt composition is preferably in a liquid state at room temperature. The molten electrolytic salt, which is a main component, is in a liquid state at room temperature or has a low melting point. Examples of the molten electrolytic salts include pyridinium salts, imidazolium salts and triazolium salts described in WO 95/18456, JP 8-259543 A, "Denki Kagaku (Electrochemistry)," 1997, Vol. 65, No. 11, page 923. The melting point of the molten electrolytic salt is preferably 50°C or lower, more preferably 25°C or lower. Specific examples of the molten electrolytic salts are described in detail in JP 2001-320068 A, paragraphs 0066 to 0082.

The molten electrolytic salts may be used alone or in combination. The molten electrolytic salts may also be used in combination with alkali metal salts such as LiI, NaI and KI, LiBF₄, CF₃COOLi, CF₃COONa, LiSCN, NaSCN, etc. The amount of the alkali metal salt added is preferably 2% by mass or less, more preferably 1% by mass or less, based on the entire electrolytic composition. 50% or more by mol of anions contained in the molten electrolytic salt composition is preferably an iodide ion.

The molten electrolytic salt composition usually contains iodine. The iodine content is preferably 0.1 to 20% by mass, more preferably 0.5 to 5% by mass, based on the entire molten electrolytic salt composition.

The molten electrolytic salt composition preferably has low volatility and does not contain a solvent. In a case where a solvent is added, the amount of the solvent added is preferably 30% by mass or less based on the total amount of the molten electrolytic salt composition. The molten electrolytic salt composition may be used in a gel form as described below.

### (2) Electrolytic solution

The electrolytic solution is preferably composed of an electrolyte, a solvent and an additive. Examples of the electrolytes used in the electrolytic solution include combinations of I₂ and an iodide (a metal iodide such as LiI, NaI, KI, CsI and CaI₂, a quaternary ammonium iodide such as tetralkylammonium iodide, pyridinium iodide and imidazolium iodide, etc.); combinations of Br₂ and a bromide (a metal bromide such as LiBr, NaBr, KBr, CsBr and CaBr₂, a quaternary ammonium bromide such as tetralkylammonium bromide and pyridinium bromide, etc.); metal complexes such as ferrocyanide-ferricyanide complexes and ferrocene-ferricinium ion complexes; sulfur compounds such as sodium polysulfides, alkylthiols and alkyldisulfides; viologen dyes; hydroquinone-quinone; etc. Preferable among them is a combination of I₂ and LiI or the quaternary ammonium iodide such as pyridinium iodide and imidazolium iodide. These electrolytes may be used in combination.

The concentration of the electrolyte in the electrolytic solution is preferably 0.1 to 10 M, more preferably 0.2 to 4 M. The concentration of iodine added to the electrolytic solution is preferably 0.01 to 0.5 M, based on the electrolytic solution.

The solvents used for the electrolytic solution are preferably those having a low viscosity and a high ionic mobility, or those having a high permittivity and capable of increasing the actual carrier concentration of the electrolytic solution, to exhibit an excellent ionic conductibility. Examples of such solvents include carbonates such as ethylene carbonate and propylene carbonate; heterocyclic compounds such as 3-methyl-2-oxazolidinone; ethers such as dioxan and diethyl ether; chain ethers such as ethylene glycol dialkylethers, propylene glycol dialkylethers, polyethylene glycol dialkylethers and polypropylene glycol dialkylethers; alcohols such as methanol, ethanol, ethylene glycol monoalkylethers, propylene glycol monoalkylethers, polyethylene glycol monoalkylethers and polypropylene glycol monoalkylethers; polyvalent alcohols such as ethylene glycol, propylene glycol, polyethylene glycol, polypropylene glycol and glycerin; nitrile compounds such as acetonitrile, glutarodinitrile, methoxyacetonitrile, propionitrile and benzonitrile; aprotic polar solvents such as dimethylsulfoxide (DMSO) and sulfolane; water; etc. These solvents may be used in combination.

The molten electrolytic salt composition described above or the electrolytic solution preferably comprises a basic compound such as *t-*butylpyridine, 2-picoline, 2,6-lutidine, etc. as described in Journal of the American Ceramic Society, 1997, Vol. 80, No. 12, pages 3157 to 3171. When the basic compound is added to the electrolytic solution, the concentration of the basic compound is preferably 0.05 to 2 M based on the electrolytic solution. When the basic compound is added to the molten electrolytic salt composition, the basic compound preferably comprises an ionizable group. The amount of the basic compound is preferably 1 to 40% by mass, more preferably 5 to 30% by mass, based on the entire molten electrolytic salt composition.

### (3) Electrolytic gel composition

The molten electrolytic salt composition or the electrolytic solution described above may be gelled (or solidified) by adding a polymer or oil-gelling agent, by the polymerization of a multifunctional monomer, by the cross-linking reaction of a polymer, etc.

In the case of adding a polymer to cause the gelation of the molten electrolytic salt composition or the electrolytic solution, usable polymers may be those described in "Polymer Electrolyte Reviews 1 and 2," edited by J. R. MacCallum and C. A. Vincent, ELSEIVER APPLIED SCIENCE. The preferable polymers are polyacrylonitrile and polyvinylidene fluoride.

In the case of adding an oil-gelling agent to cause the gelation of the molten electrolytic salt composition or the electrolytic solution, usable oil-gelling agents may be those described in Journal of the Chemical Society of Japan, Industrial Chemistry Sections, 1943, Vol. 46, page 779; Journal of the American Chemical Society, 1989, Vol. 111, page 5542; Journal of the Chemical Society, Chemical Communications, 1993, page 390; Angewandte Chemie International Edition in English, 1996, Vol. 35, page 1949; Chemistry Letters, 1996, page 885; and Journal of the Chemical Society, Chemical Communications, 1997, page 545. The preferred oil-gelling agents have an amide structure.

An example of the gelation of the electrolytic solution is described in JP 11-185863 A, and an example of the gelation of the molten electrolytic salt composition is described in JP 2000-58140 A. These are also usable for the present invention.

In the case of using the cross-linking reaction of a polymer to cause the gelation of the molten electrolytic salt composition or the electrolytic solution, it is preferable to use a polymer having a cross-linkable group together with a cross-linking agent. The cross-linkable groups are preferably amino groups or nitrogen-containing heterocyclic groups, such as a pyridyl group, an imidazolyl group, a thiazolyl group, an oxazolyl group, a triazolyl group, a morpholyl group, a piperidyl group, a piperazyl group, etc. The cross-linking agent is preferably an electrophilic reagent having a plurality of functional groups that may be subjected to electrophilic reaction with a nitrogen atom, for example, alkyl halides, aralkyl halides, sulfonates, acid anhydrides, acid chlorides, isocyanates, α,β-unsaturated sulfonyl compounds, α,β-unsaturated carbonyl compounds, α,β-unsaturated nitrile compounds, etc. The cross-linking methods disclosed in JP 2000-17076 A and JP 2000-86724 A may be used in the present invention.

### (4) Hole-transporting material

Organic, solid, hole-transporting materials, inorganic, solid, hole-transporting materials or a combination thereof may be used for the charge transfer layer instead of the ion-conductive, electrolytic composition such as the molten electrolytic salt composition.

### (a) Organic, hole-transporting materials

Preferable examples of the organic, hole-transporting materials include aromatic amines disclosed in J. Hagen, et al., Synthetic Metal, 1997, Vol. 89, pages 215 to 220, Nature, 1998, Vol. 395, October 8, pages 583 to 585, WO 97/10617, U.S. Patents 4,923,774 and 4,764,625, JP 59-194393 A, JP 5-234681 A, JP 4-308688 A, JP 3-269084 A, JP 4-129271 A, JP 4-175395 A, JP 4-264189 A, JP 4-290851 A, JP 4-364153 A, JP 5-25473 A, JP 5-239455 A, JP 5-320634 A, JP 6-1972 A, JP 7-138562 A, JP 7-252474 A, JP 11-144773 A, etc.; triphenylene derivatives disclosed in JP 11-149821 A, JP 11-148067 A, JP 11-176489 A, etc.; oligothiophene compounds disclosed in Advanced Materials, 1997, Vol. 9, No. 7, page 557, Angewandte Chemie International Edition in English, 1995, Vol. 34, No. 3, pages 303 to 307, Journal of the American Chemical Society, 1998, Vol. 120, No. 4, pages 664 to 672, etc.; and conductive polymers such as polypyrrole disclosed in K. Murakoshi, et al., Chemistry Letters, 1997, page 471, and polyacetylene, poly(*p*-phenylene), poly(*p*-phenylenevinylene), polythienylenevinylene, polythiophene, polyaniline, polytoluidine and derivatives thereof disclosed in Handbook of Organic Conductive Molecules and Polymers, Vols. 1 to 4, edited by H. S. Nalwa, issued by Wiley.

As described in Nature, 1998, Vol. 395, October 8, pages 583 to 585, added to the organic, hole-transporting material may be a compound having a cation radical such as tris(4-bromophenyl)aminium hexachloroantimonate to control the dopant level. A salt such as Li[(CF₃SO₂)₂N] may be added to control the potential of the oxide semiconductor surface, thereby compensating a space-charge layer.

### (b) Inorganic, hole-transporting material

The inorganic, hole-transporting material may be a p-type inorganic compound semiconductor. Band gap of the p-type inorganic compound semiconductor is preferably 2 eV or more, more preferably 2.5 eV or more. Ionization potential of the *p*-type inorganic compound semiconductor should be smaller than that of the photosensitive layer to reduce holes of the dye. Although the ionization potential of the *p*-type inorganic compound semiconductor may be selected depending on the kind of the dye, generally, it is preferably 4.5 to 5.5 eV, more preferably 4.7 to 5.3 eV. The p-type inorganic compound semiconductor is preferably a compound having a monovalent copper such as CuI, CuSCN, CuInSe₂, Cu(In,Ga)Se₂, CuGaSe₂, Cu_{z}O, CuS, CuGaS₂, CuInS₂, CuAlSe₂, etc. Preferable among them are CuI and CuSCN. Particularly preferable among them is CuI. Examples of others-type inorganic compound semiconductors include GaP, NiO, CoO, FeO, Bi₂O₃, MoO₂, Cr₂O₃, etc.

### (5) Formation of charge transfer layer

The charge transfer layer may be formed by any of the following two methods. One method is to attach a counter electrode to a photosensitive layer beforehand and cause a charge transfer material in a liquid state to penetrate into a gap therebetween. Another method is to directly form a charge transfer layer on a photosensitive layer, and then form a counter electrode thereon.

In the former method, the charge transfer material may be caused to penetrate into the gap by a normal pressure process utilizing capillarity, or by a reduced pressure process where the material is sucked into the gap to replace a gas phase therein with a liquid phase.

In the case of using a wet charge transfer material in the latter method, the counter electrode is disposed on the charge transfer layer without drying it, and edges thereof are treated to prevent liquid leakage, if necessary. In the case of using a gel electrolyte composition, it may be applied in a liquid state and solidified by polymerization, etc.
Solidification may be carried out before or after attaching the counter electrode. The formation of the charge transfer layer composed of the electrolytic solution, the wet organic, hole-transporting material, the electrolytic gel composition, etc. may be carried out in the same manner as in the formation of the layer of fine semiconductor particles as described above.

In the case of using a solid, electrolytic composition or a solid, hole-transporting material, the charge transfer layer may be formed by a dry film-forming method such as a vacuum deposition method and a CVD method, followed by attaching a counter electrode thereto. The organic, hole-transporting material may be introduced into the electrode by a vacuum deposition method, a casting method, a coating method, a spin-coating method, a soaking method, an electrolytic polymerization method, a photo-polymerization method, etc. The inorganic, hole-transporting material may be introduced into the electrode by a casting method, a coating method, a spin-coating method, a soaking method, an electrolytic deposition method, an electroless plating method, etc.

### (D) Counter electrode

Like the above conductive support, the counter electrode may be a single layer of the counter electrode layer comprising an electrically conductive material, or a laminate of the counter electrode layer and the substrate. Examples of electrically conductive materials used for the counter electrode layer include metals such as platinum, gold, silver, copper, aluminum, magnesium and indium; carbon; and electrically conductive metal oxides such as an indium-tin composite oxide and a fluorine-doped tin oxide. Preferable among them are platinum, gold, silver, copper, aluminum and magnesium. The substrate for the counter electrode is preferably a glass or plastic plate, to which the electrically conductive material may be applied by coating or vapor deposition. The counter electrode layer preferably has a thickness of 3 nm to 10 µm, though the thickness is not particularly limited. The surface resistance of the counter electrode layer is desirably as low as possible. The surface resistance is preferably 50 Ω/square or less, more preferably 20 Ω/square or less.

Because light may be irradiated from one side or both sides of the conductive support and the counter electrode, at least one of them should be substantially transparent so that light can reach the photosensitive layer. To improve the efficiency of power generation, it is preferable that the conductive support is substantially transparent to permit light to pass therethrough. In this case, the counter electrode is preferably reflective to light. Such counter electrode may be a glass or plastic plate vapor-deposited with a metal or an electrically conductive oxide, or a thin metal film.

The counter electrode may be formed by coating, plating or vapor-depositing (PVD, CVD, etc.) the electrically conductive material directly onto the charge transfer layer, or by attaching the electrically conductive layer formed on the substrate to the charge transfer layer. Like in the conductive support, it is preferable to use a metal lead to reduce the resistance of the counter electrode, particularly when the counter electrode is transparent. Preferable embodiments of the metal lead for the counter electrode are the same as those for the conductive support.

### (E) Other layers

A thin, dense semiconductor film is preferably formed in advance as an undercoating layer between the conductive support and the photosensitive layer, to prevent short circuit of the counter electrode and the conductive support. The method of preventing the short circuit by the undercoating layer is particularly effective in a case where the charge transfer layer comprises the electron-transporting material or the hole-transporting material. The undercoating layer is made of preferably TiO₂, SnO₂, Fe₂O₃, WO₃, ZnO or Nb₂O₅, more preferably TiO₂. The undercoating layer may be formed by a spray-pyrolysis method described in Electrochim. Acta, 40, 643-652 (1995), a sputtering method, etc. The thickness of the undercoating layer is preferably 5 to 1,000 nm, more preferably 10 to 500 nm.

Functional layers such as a protective layer and a reflection-preventing layer may be formed on the outer surface, between the electrically conductive layer and the substrate, or in the substrate, of the conductive support and/or the counter electrode. Method for forming the functional layers may be appropriately selected from a coating method, a vapor deposition method, an attaching method, etc. depending on their materials.

### (F) Interior structure of photoelectric conversion device

As described above, the photoelectric conversion device may have various interior structures depending on its use. It is classified into two major structures, one allowing light incidence from both faces, and another allowing it from only one side. Figs. 1 and 2 to 9 illustrate the preferable interior structures of the photoelectric conversion device of the present invention.

In the structure illustrated in Fig. 2, a photosensitive layer 20 and a charge transfer layer 30 are formed between a transparent, electrically conductive layer 10a and a transparent counter electrode layer 40a. This structure allows light incidence from both sides of the photoelectric conversion device.

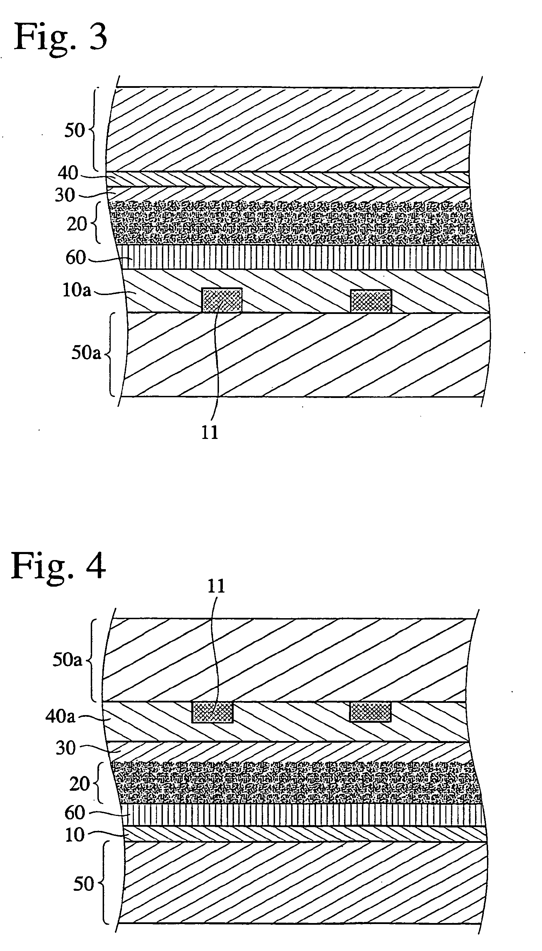

In the structure illustrated in Fig. 3, a transparent substrate 50a partially having a metal lead 11 is provided with a transparent electrically conductive layer 10a, an undercoating layer 60, a photosensitive layer 20, a charge transfer layer 30 and a counter electrode layer 40 in this order, and further provided with a substrate 50 thereon. This structure allows light incidence from the side of the electrically conductive layer.

In the structure illustrated in Fig. 4, a substrate 50 having an electrically conductive layer 10 is provided with a photosensitive layer 20 via an undercoating layer 60, and then provided with a charge transfer layer 30 and a transparent counter electrode layer 40a thereon, and further provided with a transparent substrate 50a locally having a metal lead 11 inside. This structure allows light incidence from the side of the counter electrode.

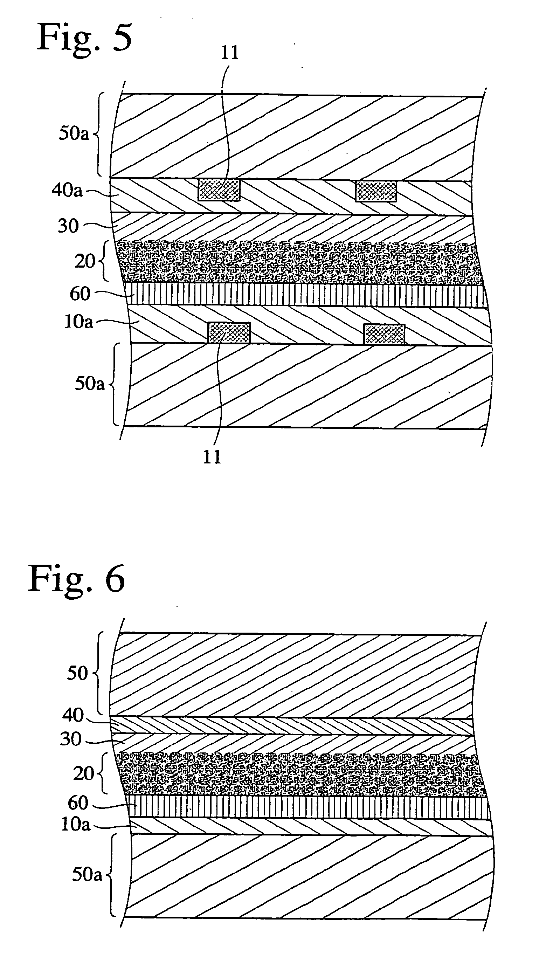

In the structure illustrated in Fig. 5, two transparent substrates 50a each partially having a metal lead 11 are provided with a transparent, electrically conductive layer 10a, 40a, and then provided with an undercoating layer 60, a photosensitive layer 20 and a charge transfer layer 30 between the conductive layers. This structure allows light incidence from both sides of the photoelectric conversion device.

In the structure illustrated in Fig. 6, a transparent substrate 50a is provided with a transparent, electrically conductive layer 10a, an undercoating layer 60, a photosensitive layer 20, a charge transfer layer 30 and a counter electrode layer 40 in this order, and then attached to a substrate 50. This structure allows light incidence from the side of the electrically conductive layer.

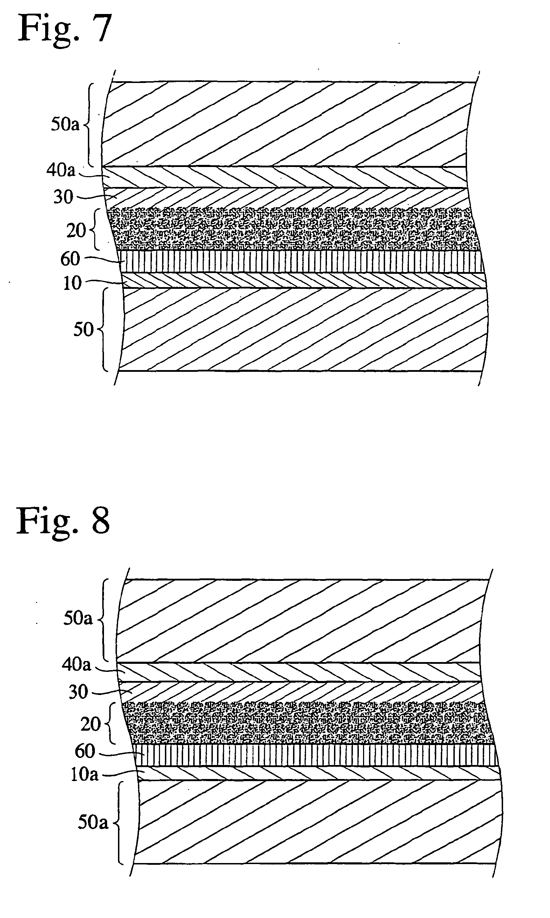

In the structure illustrated in Fig. 7, a substrate 50 is provided with an electrically conductive layer 10, an undercoating layer 60, a photosensitive layer 20, a charge transfer layer 30 and a transparent counter electrode layer 40a in this order, and then attached to a transparent substrate 50a. This structure allows light incidence from the side of the counter electrode.

In the structure illustrated in Fig. 8, a transparent substrate 50a is provided with a transparent, electrically conductive layer 10a, an undercoating layer 60, a photosensitive layer 20, a charge transfer layer 30 and a transparent counter electrode layer 40a in this order, and then attached to a transparent substrate 50a. This structure allows light incidence from both sides of the photoelectric conversion device.

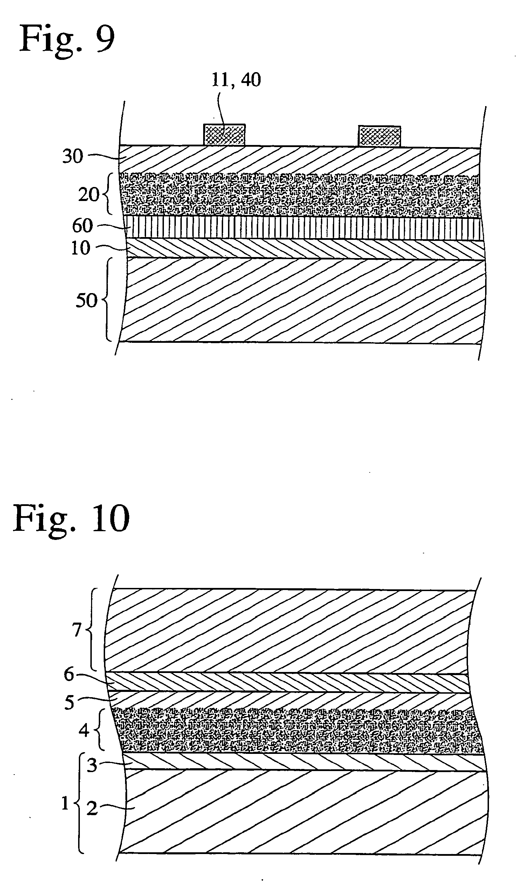

In the structure illustrated in Fig. 9, a substrate 50 is provided with an electrically conductive layer 10, an undercoating layer 60, a photosensitive layer 20, a solid charge transfer layer 30 in this order, and then partially provided with a counter electrode layer 40 or a metal lead 11. This structure allows light incidence from the side of the counter electrode.

### [3] Photoelectric cell

The photoelectric cell comprises the above photoelectric conversion device, which connects to an external circuit to do a work in the circuit. Such a photoelectric cell that uses the charge transfer material mainly composed of the ion-conductive material is referred to as a photo-electrochemical cell. The photoelectric cell intended for generating power with solar light is referred to as a solar cell.

The edges of the photoelectric cell are preferably sealed with a polymer or an adhesive, etc. to prevent the cell content from deteriorating and evaporating. A known external circuit may be connected to the conductive support and the counter electrode via a lead.

When the photoelectric conversion device is used for a solar cell, the interior structure of the solar cell may be essentially the same as that of the photoelectric conversion device mentioned above. The dye-sensitized solar cell comprising the photoelectric conversion device of the present invention may have essentially the same module structure as those of known solar cells. In the solar cell module, a cell is generally disposed on a substrate of metal, ceramic, etc. and covered with a packing resin, a protective glass, etc., whereby light is introduced from the opposite side of the substrate. The solar cell module may have a structure where the cell is placed on a substrate of a transparent material such as a tempered glass to introduce light from the transparent substrate side. Specifically, a superstraight-type module structure, a substrate-type module structure, a potting-type module structure, substrate-integrated module structure that is generally used in amorphous silicon solar cells, etc. are known as the solar cell module structure. The dye-sensitive solar cell comprising the photoelectric conversion device may have a module structure properly selected from the above structures depending on ends, locations and environment where it is used, and preferably has a module structure disclosed in JP Application No. 11-8457, JP 2000-268892 A, etc.

The present invention will be explained in more detail with reference to Examples below without intention of restricting the scope of the present invention.

The dye-sensitized photoelectric conversion device does not form part of the invention.

### Example 1

### [A] Production of titanium oxide sol

### (1) Production of comparative titanium oxide sol

79 ml of tetraisopropyl orthotitanate available from Wako Pure Chemical Industries, Ltd. was added to 440 ml of a 0.09-mol/L diluted aqueous nitric acid solution at 25°C at one lot, stirred at 25°C for 10 minutes, and heated and stirred at 70°C for about 4 hours, to obtain a semitransparent sol liquid. The semitransparent sol liquid was further heated at 70°C for 1 hour and filtrated to obtain a titanium oxide sol S-1 with a solid content of 5.1 % by mass. The X-ray diffraction analysis of the titanium oxide sol S-1 indicated that it contained anatase particles having a crystallite size of 5 nm. The crystallite size was calculated from the half bandwidth of the diffraction peak at 2θ = 25.2° (hkl = 101) relative to Cu-Kα radiation.

Production of another titanium oxide sol was attempted in the same manner as in the production of the titanium oxide sol S-1 except that the concentration of dilute nitric acid was 0.03 mol/L. However, the reaction liquid of tetraisopropyl orthotitanate and the aqueous solution of dilute nitric acid was still a milk-white suspension and did not converted into a semitransparent sol even after heating the reaction liquid for 10 hours. From this result, it was clear that the amount of the acid catalyst could not be reduced in the conventional method where the alcohol was not removed.

### (2) Production of titanium oxide sol according to method of the present invention

79 ml of tetraisopropyl orthotitanate available from Wako Pure Chemical Industries, Ltd. was added to 440 ml of a 0.09-mol/L diluted aqueous nitric acid solution at 25°C at one lot, stirred for 10 minutes, and left to stand. The supernatant liquid of the resultant suspension was removed by decantation, and the precipitate was washed with the 0.09 mol/L aqueous solution of dilute nitric acid. After repeating the decantation 3 times, a 0.09-mol/L diluted aqueous nitric acid solution was added such that the total weight of the suspension was 500 g. The amount of 2-propanol generated by the hydrolysis, which remained in the suspension, was 0.01 mol/L. The suspension was heated and stirred at 70°C for 1 hour, to obtain a sol liquid. The sol liquid was further heated for 1 hour and filtrated to obtain a titanium oxide sol S-2 with a solid content of 5.1% by mass, which was higher in transparency than the titanium oxide sol S-1. The titanium oxide sol S-2 was subjected to X-ray diffraction analysis. As a result, the titanium oxide sol S-2 contained anatase particles having a crystallite size of 5 nm. As compared with the conventional method, the heating time could be shortened to produce the titanium oxide sol in the method of the present invention.

A titanium oxide sol S-2' was produced in the same manner as in the titanium oxide sol S-2 except that the concentration of dilute nitric acid . was 0.03 mol/L and that the heating time was 4 hours. The titanium oxide sol S-2' was lower in transparency than the titanium oxide sol S-1. X-ray diffraction analysis indicated that the titanium oxide sol S-2' contained anatase particles having a crystallite size of 5 nm. From this, it was clear that the amount of the acid catalyst could be reduced in the method of the present invention.

### (3) Evaluation of dispersion stability

A 0.1 mol/L ammonium fluoride aqueous solution was added dropwise to 20 ml of each of the titanium oxide sols S-1 and S-2, and the amount of the ammonium fluoride aqueous solution that caused agglutination was evaluated. The titanium oxide sol S-1 was agglutinated by 8 ml of the ammonium fluoride aqueous solution, while the titanium oxide sol S-2 was agglutinated by 14 ml of the ammonium fluoride aqueous solution. From the results, it was clear that the titanium oxide sol produced by the method of the present invention was more excellent in the dispersion stability. Thus, an additive such as an inorganic salt for doping can be uniformly added in the method of the present invention.

### [B] Production of fine titanium oxide particles

### (1) Production of comparative fine titanium oxide particles

50 ml of the titanium oxide sol S-1 was heated at 225°C for 24 hours in a stainless steel autoclave having an internal portion of Teflon (trademark). The obtained titanium oxide dispersion was centrifuged at 10,000 rpm for 10 minutes. The supernatant liquid of the centrifuged dispersion contained impurities to show yellow. The supernatant liquid was removed by decantation, to obtain 10 g of a wet titanium oxide cake W-1. The wet titanium oxide cake W-1 had a titanium oxide content of 23% by mass, and contained anatase particles having a crystallite size of 11.3 nm, which was determined by an X-ray diffraction method.

### (2) Production of fine titanium oxide particles according to the method of the present invention

50 ml of the titanium oxide sol S-2 was heated at 225°C for 24 hours in a stainless steel autoclave having an internal portion of Teflon (trademark). The obtained titanium oxide dispersion was centrifuged at 10,000 rpm for 10 minutes. The supernatant liquid of the centrifuged dispersion was colorless. The supernatant liquid was removed by decantation, to obtain 9.5 g of a wet titanium oxide cake W-2. The wet titanium oxide cake W-2 had a titanium oxide content of 24% by mass. As a result of X-ray diffraction, the wet titanium oxide cake W-2 contained anatase particles as a main component, and a small amount of brookite as a by-product. The anatase particles had a crystallite size of 11.5 nm.

### [C] Production and evaluation of photoelectric conversion device

### (1) Preparation of titanium oxide dispersion

10 g of each of the wet titanium oxide cakes W-1 and W-2, 0.7 g of polyethylene glycol (molecular weight: 20,000, available from Wako Pure Chemical Industries, Ltd.), and 5 g of water were mixed and well stirred to dissolve polyethylene glycol. The viscosity of each of the resultant mixtures was then controlled by adding 1 g of ethanol and 0.4 ml of a concentrated nitric acid solution, to prepare titanium oxide dispersions C-1 and C-2, respectively.

### (2) Preparation of dye-sensitized titanium oxide electrode

Using 11 transparent, electrically conductive glass plates each coated with fluorine-doped tin oxide (surface resistance: approximately 10 Ω/cm², available from Nippon Sheet Glass Co., Ltd.,), each of the titanium oxide dispersions C-1 and C-2 was applied to a conductive layer of each transparent, electrically conductive glass plate by a doctor blade, dried at 25°C for 30 minutes, and burned at 450°C for 30 minutes in an electric furnace "muffle furnace FP-32" available from YAMATO SCIENTIFIC CO., LTD., to obtain a titanium oxide electrode. The amount of the solid content applied per a unit area (1 m²) was calculated from the mass changed before and after the application and burning.

After the burning, each titanium oxide electrode was immersed in a dye adsorption liquid comprising the dye (A) shown below for 8 hours. The concentration of the dye (A) in the dye adsorption liquid was 0.3 mmol/L, and the temperature of the dye adsorption liquid was 40°C.
Used as a solvent of the dye adsorption liquid was a mixed solvent of ethanol, *t*-butanol and acetonitrile (volume ratio of ethanol / *t*-butanol / acetonitrile was 1:1:2). Then, the resultant titanium dioxide electrode was washed with ethanol and acetonitrile successively, to prepare dye-sensitized titanium oxide electrodes E-1 and E-2, respectively.

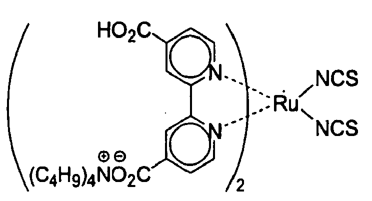

### (3) Production of photoelectric conversion device

Each of the dye-sensitized titanium oxide electrodes E- 1 and E-2 of 2 cm × 2 cm was laminated on a platinum-vapor-deposited glass plate having the same size (see Fig. 10). Next, an electrolytic acetonitrile solution comprising 0.65 mol/L of 1,3-dimethylimidazolium iodide, 0.05 mol/L of iodine and 0.1 mol/L of t-butylpyridine were permeated into a gap between the two glass plates by capillarity, to obtain photoelectric conversion devices SC-1 and SC-2 shown in Table 1, respectively. These photoelectric conversion devices had a structure, in which a conductive glass plate 1 composed of a glass plate 2 and an electrically conductive layer 3 laminated thereon, a dye-adsorbed titanium oxide layer 4, a charge transfer layer 5, a platinum layer 6 and a glass plate 7 were laminated in this order, as shown in Fig. 10.

**Table 1**

| Photoelectric Conversion Device | Wet Titanium Oxide Cake | Titanium Oxide Dispersions | Dye-sensitized Titanium Oxide Electrode | Amount of Applied Solid Content (g/m²) |
|---|---|---|---|---|
| SC-1 | W-1 | C-1 | E-1 | 16.2 |
| SC-2 | W-2 | C-2 | E-2 | 16.2 |

### (4) Evaluation of photoelectric conversion efficiency

A simulated sunlight was obtained by passing light of a 500-W xenon lamp available from USHIO INC. through an "AM 1.5 filter" available from Oriel. The simulated sunlight had intensity of 102 mW/cm² in a vertical plane. A silver paste was applied to an edge of an electrically conductive glass plate in each of the photoelectric conversion devices SC-1 and SC-2 to form a negative electrode. The negative electrode and the platinum-deposited glass plate as a positive electrode were connected to a current-voltage tester "Keithley SMU238." While vertically irradiating the simulated sunlight to each of the photoelectric conversion devices SC-1 and SC-2, the current-voltage characteristics of each device were measured to determine the photoelectric conversion efficiency. The photoelectric conversion properties of each photoelectric conversion device are shown in Table 2.

**Table 2**

| Photoelectric Conversion Device | Short-circuit Current Density(mA/cm²) | Open-Circuit Voltage(V) | Fill Factor (FF) | Conversion Efficiency(%) | Note |
|---|---|---|---|---|---|
| SC-1 | 11.7 | 0.66 | 0.63 | 4.8 | Comparative Example |
| SC-2 | 12.5 | 0.66 | 0.64 | 5.2 | Present Invention |

The photoelectric conversion device SC-1 comprised the fine titanium oxide particles produced by a conventional method, and the photoelectric conversion device SC-2 comprised the fine titanium oxide particles produced by a method of the present invention in which 2-propanol produced by hydrolysis was removed by decantation. The particle diameters of the fine titanium oxide particles used in the photoelectric conversion devices SC-1 and SC-2 were almost equal, 11.3 nm and 11.5 nm respectively. The photoelectric conversion device SC-2 of the present invention was higher in the short-circuit current density and the fill factor than the photoelectric conversion device SC-1 of a comparative example, and as a result, exhibited a higher photoelectric conversion efficiency.

### Example 2

A titanium oxide sol S-3 was produced in the same manner as in the titanium oxide sol S-2 except that the concentration of dilute nitric acid was 0.12 mol/L. The titanium oxide sol S-3 was remarkably excellent in transparency and dispersion property.

Then, fine titanium oxide particles were prepared and a wet titanium oxide cake W-3 was produced in the same manner as in the wet titanium oxide cake W-2 except for using the titanium oxide sol S-3 instead of the titanium oxide sol S-2. As a result of X-ray diffraction, the crystal form of the particles in the wet titanium oxide cake W-3 was mixture of anatase and rutile, and a small amount of brookite was found therein as a by-product. The anatase particles had a crystallite size of 11.0 nm, and the rutile particles had a crystallite size of 30 nm or more.

A titanium oxide sol S-4 was produced in the same manner as in the titanium oxide sol S-2 except that an aqueous solution containing 0.03 mol/L of nitric acid and 0.3 mol/L of acetic acid was used instead of the 0.09 mol/L aqueous solution of dilute nitric acid. The titanium oxide sol S-4 was excellent in transparency and dispersion property. Then, fine titanium oxide particles were prepared and a wet titanium oxide cake W-4 was produced in the same manner as in the wet titanium oxide cake W-2 except for using the titanium oxide sol S-4 instead of the titanium oxide sol S-2. As a result of X-ray diffraction, the crystal form of the particles in the wet titanium oxide cake W-4 was pure anatase, and brookite was not found in the wet titanium oxide cake W-4. The anatase particles had a crystallite size of 10.9 nm.

Photoelectric conversion devices SC-3 and SC-4 were produced and evaluated with respect to the photoelectric conversion efficiency in the same manner as Example 1 except for using the wet titanium oxide cakes W-3 and W-4 instead of the wet titanium oxide cakes W-1 and W-2, respectively. The amount of TiO₂ applied per a unit area of each photoelectric conversion device was 16.2 g/m².

**Table 3**

| Photoelectric Conversion Device | Short-circuit Current Density (mA/cm²) | Open-Circuit Voltage(V) | Fill Factor(FF) | Conversion Efficiency(%) | Note |
|---|---|---|---|---|---|
| SC-3 | 12.6 | 0.65 | 0.63 | 5.1 | Present Invention |
| SC-4 | 13.2 | 0.68 | 0.64 | 5.6 | Present Invention |

It was clear from the results that the conversion efficiency of the dye-sensitized photoelectric conversion device was reduced when the titanium oxide particles contained rutile. On the other hand, the conversion efficiency of the dye-sensitized photoelectric conversion device was increased by using the pure anatase titanium oxide particles containing no rutile and brookite.

### Example 3

### (1) Production of fine titanium oxide particles

50 ml of the titanium oxide sol S-4 was heated under conditions of a heating temperature and a heating time shown in Table 4 in a stainless steel autoclave having an internal portion of Teflon (for heating at 200 to 240°C) or titanium (for heating at 260 to 280°C). The obtained titanium oxide dispersion was centrifuged at 10,000 rpm for 10 minutes. The supernatant liquid was removed by decantation, to obtain wet titanium oxide cakes W-5 to W-12, respectively. The crystal form and the crystallite size of the fine titanium oxide particles in each wet titanium oxide cake were determined by an X-ray diffraction method, and the results were shown in Table 4.

**Table 4**

| Wet Titanium Oxide Cake | Heating Temperature | Heating Time | Crystal Form Crystal Form | Crystallite Size (nm) |
|---|---|---|---|---|
| W-5 | 200°C | 20 hours | Pure Anatase | 10.4 |
| W-6 | 225°C | 20 hours | PureAnatase | 10.7 |
| W-7 | 240°C | 20 hours | PurcAnatase | 11.5 |
| W-8 | 260°C | 20 hours | Pure Anatase | 14.6 |
| W-9 | 280°C | 20 hours | Pure Anatase | 17.5 |
| W-10 | 225°C | 10 hours | PurcAnatase | 9.9 |
| W-11 | 225°C | 40 hours | Pure Anatase | 13.1 |
| W-12 | 200°C | 80 hours | Pure Anatase | 10.8 |

The wet titanium oxide cakes W-5 to W-9 were produced by heating the titanium oxide sol at a different heating temperature, respectively. The higher the heating temperature, the larger the crystallite size of the fine titanium oxide particles became. Further, even in a case where the heating temperature was 280°C, the crystal form was anatase, rutile being not produced. The wet titanium oxide cakes W-6, W-10 and W-11 were produced by heating the titanium oxide sol at the same heating temperature of 225°C for a different heating time, respectively. The longer the heating time, the larger the crystallite size of the fine titanium oxide particles became. Further, as clear from the results of the wet titanium oxide cake W-12, the crystal form was anatase, rutile being not produced, even in the case of the heating time of 80 hours.

### (2) Production and evaluation of photoelectric conversion device

Dye-sensitized titanium oxide electrodes E-5 to E-11 were prepared and then photoelectric conversion devices SC-5 to SC-11 were produced and evaluated in the same manner as Example 1 except for using the wet titanium oxide cakes W-5 to W-11 instead of the wet titanium oxide cakes W-1 and W-2, respectively. The results of the evaluation were shown in Table 5.

**Table 5**

| Photoelectric Conversion Device | Short-circuit Current Density(mA/cm²) | Open-Circuit Voltage(V) | Fill Factor(FF) | Conversion Efficiency(%) |
|---|---|---|---|---|
| SC-5 | 13.1 | 0.67 | 0.63 | 5.4 |
| SC-6 | 14.5 | 0.68 | 0.64 | 6.2 |
| SC-7 | 14.0 | 0.69 | 0.64 | 6.1 |
| SC-8 | 12.1 | 0.70 | 0.65 | 5.4 |
| SC-9 | 11.4 | 0.71 | 0.65 | 5.2 |
| SC-10 | 13.2 | 0.66 | 0.62 | 5.3 |
| SC-11 | 12.7 | 0.69 | 0.65 | 5.5 |

It was clear from the results of the photoelectric conversion devices SC-5 to SC-9 that the heating temperature was preferably 200 to 260°C, most preferably 225 to 240°C, to obtain high photoelectric conversion efficiency. Further, among the photoelectric conversion devices SC-6, SC-10 and SC-11 using the wet titanium oxide cakes produced by heating the titanium oxide sol at 225 °C, the photoelectric conversion device SC-6 using the titanium oxide particles produced by heating for 20 hours exhibited the highest conversion efficiency.

As described above, the method of the present invention can produce a titanium oxide sol having excellent dispersion stability in a short period of time. A dye-sensitized photoelectric conversion device excellent in photoelectric conversion efficiency can be obtained by using fine titanium oxide particles produced by heating the titanium oxide sol in a pressure vessel.

## Claims

1. A method for producing a titanium oxide sol, comprising the steps of hydrolyzing an orthotitanate, and dehydrating the resultant hydrolyzate in the presence of an acid catalyst, wherein an alcohol contained in the reaction liquid is removed by a decantation method before the dehydrating step, and the amount of remaining alcohol in the reaction liquid after an alcohol-removing step is 0.01 mol/L or less.

2. The method for producing a titanium oxide sol according to claim 1, wherein 0.005 to 0.09 mol/L of a strong acid is used as said acid catalyst in the dehydrating step.

3. The method for producing a titanium oxide sol according to claim 1 or 2, wherein 0.1 to 1 mol/L of a water-soluble carboxylic acid is used as an additive in the dehydrating step.

4. A method for producing fine titanium oxide particles, wherein the titanium oxide sol produced by the method recited in any one of claims 1 to 3 is heated under pressure.

5. The method according to claim 4, wherein the heating temperature of the titanium oxide sol is 180-280°C.

## Patentansprüche

1. Verfahren zur Herstellung eines Titanoxid-Sols, umfassend die Schritte des Hydrolysierens eines Orthotitanats und Dehydrierens des resultierenden Hydrolysats in Anwesenheit eines Säurekatalysators,
wobei vor der Dehydrierungsstufe ein an der Flüssigreaktion beteiligter Alkohol durch ein Dekantationsverfahren entfernt wird, und die nach der Alkoholentfernungsstufe in der Flüssigreaktion verbleibende Restmenge an Alkohol 0,01 Mol/l oder weniger beträgt.

2. Verfahren zur Herstellung eines Titanoxid-Sols nach Anspruch 1, wobei in der Dehydrierungsstufe als Säurekatalysator 0,005 bis 0,09 Mol/l einer starken Säure verwendet wird.

3. Verfahren zur Herstellung eines Titanoxid-Sols nach Anspruch 1 oder 2, wobei in der Dehydrierungsstufe als Additiv 0,1 bis 1 Mol/l wasser-lösliche Carbonsäure verwendet wird.

4. Verfahren zur Herstellung feiner Titanoxidteilchen, wobei das nach dem in den Ansprüchen 1 bis 3 zitierten Verfahren hergestellte Titanoxid-Sol unter Druck erhitzt wird.

5. Verfahren nach Anspruch 4, wobei die Aufheiztemperatur des Titrandioxid-Sols 180-280°C beträgt.

## Revendications

1. Procédé de production d'un sol d'oxyde de titane, comprenant les étapes consistant à hydrolyser un orthotitanate, et à déshydrater l'hydrolysat résultant en présence d'un catalyseur acide, dans lequel un alcool contenu dans le liquide réactionnel est éliminé par un procédé de décantation avant l'étape de déshydratation, et la quantité d'alcool résiduel dans le liquide réactionnel après une étape d'élimination de l'alcool est de 0,01 mol/L ou moins.

2. Procédé de production d'un sol d'oxyde de titane selon la revendication 1, dans lequel 0,005 à 0,09 mol/L d'un acide fort est utilisé à titre dudit catalyseur acide dans l'étape de déshydratation.

3. Procédé de production d'un sol d'oxyde de titane selon la revendication 1 ou 2, dans lequel 0,1 à 1 mol/L d'un acide carboxylique soluble dans l'eau est utilisé à titre d'additif dans l'étape de déshydratation.

4. Procédé de production de fines particules d'oxyde de titane, dans lequel le sol d'oxyde de titane produit par le procédé indiqué dans l'une quelconque des revendications 1 à 3 est chauffé sous pression.

5. Procédé selon la revendication 4, dans lequel la température de chauffage du sol d'oxyde de titane est de 180-280°C.
